# EUROPÄISCHE PATENTSCHRIFT

(11) **EP 2 913 537 B1**
(45) Veröffentlichungstag und Bekanntmachung des Hinweises auf die Patenterteilung: **25.01.2017**
(21) Anmeldenummer: 15000556.9
(22) Anmeldetag: 26.02.2015
(51) Int. Cl.: F16B 7/04, F16B 12/40

(54) **Verbindung zwischen einem Hohlprofil und einem an dessen Stirnseite anliegenden Teil**
Connection between a hollow profile and a part adjacent to its front
Liaison entre un profilé creux et une pièce reposant sur sa face avant

(30) Priorität: 27.02.2014 DE 202014100893 U
(43) Veröffentlichungstag der Anmeldung: 02.09.2015
(73) Patentinhaber: Marchhart GmbH, 7201 Neudörfl (AT)
(72) Erfinder: Marchhart, Johannes, 7201 Neudörfl (AT)

(56) Entgegenhaltungen:
- WO-A1-90/09530
- CH-A- 534 819
- DE-U1- 8 136 800
- FR-A1- 2 687 194

## Beschreibung

Die Erfindung betrifft eine Verbindung zwischen einem Hohlprofil und einem an dessen Stirnseite anliegenden Teil.

Ein wertvoller Einsatzfall ist die Bildung von optisch schönen und stabilen Rahmen oder Gestellen von Möbeln, insbesondere von Tischgestellen.

Die Schriften CH 534819 A, AT 413430 B, DE 1970271 U, DE 3312757 A1, DE 3607849 C1, DE 3821625 A1, DE 9113128 U1, EP 2441969 A1 und US 4124317 A zeigen allesamt Verbindungen zwischen Hohlprofilen, wobei ein erstes Hohlprofil mit einer stirnseitigen Endfläche an einer Seitenfläche des zweiten Profils - welches auch ein Hohlprofil sein kann - anliegt und wobei ein im ersten Hohlprofil angeordneter Verbindungsbeschlag mit hakenförmigen Fortsätzen durch eine Öffnung an der Seitenfläche des zweiten Profils hindurch ragt und an Rändern der Öffnung mit dem zweiten Profil verhakt ist. An der Verhakung wird vom Verbindungsbeschlag eine Kraft auf das zweite Profil ausgeübt durch welches dieses zum ersten Profil hin gezogen wird, sodass es an diesem unter Druck satt anliegt. Hinsichtlich dessen, wie die Kraft auf die Verhakung aufgebracht wird, gibt es mehrere Funktionsprinzipien:
Gemäß den Schriften AT 413430 B, DE 1970271 U, DE 3312757 A1, DE 3607849 C1, DE 3821625 A1, DE 9113128 U1 verläuft durch den Verbindungsbeschlag im ersten Hohlprofil eine normal zur Längsrichtung des ersten Hohlprofils ausgerichtete Achse, welche an Wänden des ersten Hohlprofils exzentrisch drehbar gelagert ist. Dadurch kann der Verbindungsbeschlag in Längsrichtung des ersten Hohlprofils bewegt werden indem die Achse in ihrer Lagerung gedreht wird. Diesen Effekt nutzt man zum Spannen der Verhakung.

Gemäß der EP 2441969 A1 ist der Verbindungsbeschlag vom zweiten Profil weg bewegbar und damit die Verhakung spannbar, indem eine am ersten Hohlprofil gegen Längsbewegung fixierte Schraube mit einer Gewindebohrung im Verbindungsbeschlag in Gewindeeingriff ist und gedreht wird.

Gemäß der US 4124317 A ragt vom Verbindungsbeschlag eine damit starr verbundene Schraube in das erste Hohlprofil und ist dort mit einer gegen Längsbewegung fixierten Mutter in Gewindeeingriff. Wenn die Mutter gedreht wird, wird die Schraube in Längsrichtung bewegt und damit die Verhakung gespannt.

Gemäß der CH 534819 A weist der Verbindungsbeschlag neben einem starren Hakenteil zusätzlich einen zweiarmigen Hebel auf, bei welchem das erste Hebelende als Haken ausgebildet ist. Der Hebel ist um einen Achsbolzen, welcher im ersten Hohlprofil fixiert und normal zur Längsrichtung des Hohlprofils ausgerichtet ist, drehbar gelagert gehalten. Indem der Hebel um diesen Achsbolzen geschwenkt wird, führt der Haken gegenüber dem ersten Hohlprofil eine Bewegung entlang einer Kreislinie durch, wodurch die Verhakungen mit dem zweiten Profil hergestellt und auch etwas gespannt wird. Die Drehbewegung des Hebels ist durch Drehung einer Schraube antreibbar, welche mit ihrem Kopf an der Außenseite der Mantelfläche des ersten Hohlprofils anliegt und mit ihrem Gewindeteil mit einem Mutternteil am zweiten Hebelende in Eingriff ist.

Die der Erfindung zu Grunde liegende Aufgabe besteht darin, eine Methode für das Verbinden von T- oder L-förmig aufeinandertreffenden Profilen zu schaffen, welche auch an Hohlprofilen anwendbar ist, wobei im Fall von Hohlprofilen kein Teil über die Mantelfläche der Hohlprofile vorstehen soll. Gegenüber den oben erwähnten Lösungen mit Verhakung und Exzenter soll die Anzugskraft besser dosierbar sein. Gegenüber den oben erwähnten Lösungen mit Schraube und Verhakung soll bezogen auf das Gewicht der verwendeten Teile eine höhere Steifigkeit und Festigkeit der Verbindung erreichbar sein. Gegenüber der Bauweise entsprechend der CH 534819 A soll die Verbesserung darin bestehen, dass bezogen auf das Gewicht der verwendeten Teile, eine höhere Steifigkeit und Festigkeit der Verbindung erreicht wird, und dass kein Teil über die Mantelfläche der Profile vorsteht.

All diese Aufgaben sollen unter strenger Beachtung von Wirtschaftlichkeit lösbar sein.

Für das Lösen der Aufgabe werden von den zuvor beschriebenen Bauweisen die Merkmale übernommen, dass
- das erste Hohlprofil mit seiner stirnseitigen Endfläche an einer Seitenfläche des zweiten Hohlprofils anliegt,
- ein im ersten Hohlprofil angeordneter Verbindungsbeschlag mit hakenförmigen Fortsätzen durch eine Öffnung an der Seitenfläche des zweiten Hohlprofils hindurch ragt und an den Rändern der Öffnung mit dem zweiten Profil verhakt ist, und
- dass an der Verhakung vom Verbindungsbeschlag aus eine Kraft auf das zweite Hohlprofil ausgeübt wird, durch welche dieses zum ersten Hohlprofil hin gezogen wird.

Als erfindungsgemäße Verbesserung dazu wird die Kombination folgender Merkmale vorgeschlagen:
An jenem Teil des Verbindungsbeschlags, welcher mit dem zweiten Profil verhakt ist, ist ein einarmiger Hebel schwenkbar angelenkt ist. Die Schwenkachse des Hebels ist normal zur Profilrichtung des ersten Profils ausgerichtet wobei der Hebel während seiner Schwenkbewegung mit einer Anschlagfläche mit einem solchen Randstück einer Öffnung in einer Mantelflächenseite des ersten Hohlprofils kollidiert, welches bezüglich dieser Öffnung dem zweiten Profil zugewandt liegt. Die Schwenkbewegung des Hebels ist durch eine Schraube antreibbar, welche von der, der Anschlagfläche gegenüberliegenden Seite des Hebels her, an diesen andrückt.

In einer bevorzugten Ausführungsform werden zwei besagte einarmige Hebel verwendet und die Schraube ist an beiden Hebeln abgestützt. Damit lässt sich auch bei erheblichen Fertigungstoleranzen hohe Funktionssicherheit erreichen.

In einer weiter bevorzugten Ausführungsform sind die beiden Hebel monolithisch mit jenem Teil des Verbindungsbeschlages verbunden, welcher mit dem zweiten Profil verhakt ist, wobei das Schwenkender Hebel gegenüber diesem verhakten Teil unter elastischer Verformung der Hebel stattfindet. Damit ergibt sich eine sehr kostengünstige Bauweise mit einer extrem kleinen Anzahl an Einzelteilen.

Die Verbindung ist nicht nur zum Verbinden zweier Hohlprofile miteinander anwendbar, sondern auch zum Verbinden eines Hohlprofils mit einem nahezu beliebig geformten anderen Teil. Im Folgenden wird die Erfindung aber dennoch vorläufig an Hand der Verbindung zweier Hohlprofile beschrieben, da dies besonders anschaulich ist und auch der wertvollste Einsatzfall sein dürfte.

Die Erfindung wird an Hand von Zeichnungen zu vorteilhaften Ausführungsbeispielen veranschaulicht:
- Fig. 1:: zeigt eine erste beispielhafte erfindungsgemäße Verbindung in seitlicher Teilschnittansicht. Die Blickebene ist dabei parallel zur Profilrichtung des ersten der beiden zu verbindenden Hohlprofile und normal zur Profilrichtung des zweiten Hohlprofils.
- Fig. 2:: zeigt in gleichartiger Ansicht wie Fig.1 eine zweite beispielhafte erfindungsgemäße Verbindung.

Gemäß den Zeichnungen werden zwei Hohlprofile 1, 2 in einer T-Verbindung aneinander gefügt. Dabei liegt das erste Hohlprofil 1 mit einer Stirnseite an einer Seitenfläche 2.1 des zweiten Hohlprofils 2 an.

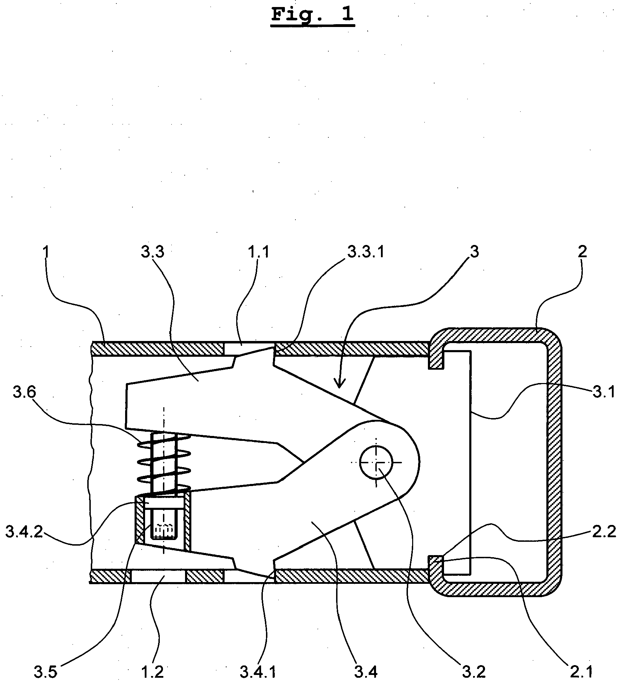

Gemäß Fig. 1 wird ein Verbindungsbeschlag 3 verwendet, welcher einen Hakenteil 3.1 und zwei daran um eine Achse 3.2 schwenkbar befestigte einarmige Hebel 3.3, 3.4 aufweist.

Der Verbindungsbeschlag 3 befindet sich im Wesentlichen im ersten Hohlprofil 1. Nur sein Hakenteil 3.1 ragt etwas durch eine Öffnung in der Seitenfläche 2.1 des zweiten Hohlprofils 2 in den Profilhohlraum des Hohlprofils 2 hinein. Der in den Profilhohlraum des Hohlprofils 2 ragende Teil des Hakenteils 3.1 ist an den gegenüberliegenden Rändern 2.2 der besagten Öffnung dagegen verhakt durch eine Bewegung parallel zur Profilrichtung des ersten Hohlprofils 1 aus dem Profilhohlraum des Hohlprofils 2 herausgezogen zu werden. Die Verhakung ist gebildet, indem ein Bereich des Hakenteils 1 vom ersten Hohlprofil 1 aus gesehen hinter jenen Bereich der Seitenwand 2.1 ragt, welche an den Rand 2.2 der Öffnung folgt, wobei der vom ersten Hohlprofil 1 aus gesehen, hinter der Seitenwand 2.1 liegende Teil des Hakenteils 3.1, gegenüber der Öffnung in der Seitenwand erweitert ist.

Die Achse 3.2 ist parallel zur Profilrichtung des zweiten Hohlprofils 2 und damit normal zur Profilrichtung des ersten Hohlprofils 1 ausgerichtet. Weiters ist die Achse normal zur Verbindungslinie zwischen den beiden Verhakungen des Hakenteils 3.1 ausgerichtet und von beiden Verhakungen gleich weit entfernt.

Die beiden leicht gekrümmten Hebel 3.3, 3.4 erstrecken sich von der Achse 3.2 aus in Profilrichtung des ersten Hohlprofils 1 weiter in das Hohlprofil 1 hinein. Wenn ein Hebel 3.3, 3.4 um die Achse 3.2 so geschwenkt wird, dass der bezüglich seiner Krümmung außen liegende Randbereich vorne liegt, so stößt der Hebel 3.3, 3.4 mit einer Randfläche 3.3.1, 3.4.1 die des Weiteren als "Anschlagfläche" 3.3.1, 3.4.1 bezeichnet wird, an einen solchen Rand einer Öffnung 1.1 einer Seitenfläche des ersten Hohlprofils 1, welcher dem Hohlprofil 2 zugewandt ist. Wenn auf den Hebel 3.3, 3.4 ein Drehmoment aufgebracht wird, welches "trachtet" den Hebel weiter zu schwenken, so tritt als Reaktion zwischen der Anschlagfläche 3.3.1, 3.4.1 und dem besagten Rand der Öffnung 1.1 eine Druckraft auf, durch welche das erste Hohlprofil 1 gegen das zweite Hohlprofil 2 angedrückt wird, sodass die beiden Hohlprofile aneinander fixiert werden.

Das besagte Drehmoment kann durch eine Schraube 3.5 aufgebracht werden, welche am achsfernen Endbereich des Hebels 3.4 mit einer dort fixierten Mutter 3.4.2 in Gewindeeingriff ist und mit ihrer vom Schraubenkopf abgewandten Stirnseite an der dem Hebel 3.4 zugewandten Seite des Endbereichs des Hebels 3.3 anliegt. Wenn die Schraube 3.5 so gedreht wird, dass sie sich vom Hebel 3.4 aus zum Hebel 3.3 hin bewegt, schiebt sie die Enden der beiden Hebel 3.3 und 3.4 voneinander weg, sodass beide Hebel mit ihren Anschlagflächen 3.3.1, 3.4.1 die besagte Druckkraft an einem Rand der jeweiligen Öffnung 1.1 aufbauen.

Um an der Schraube 3.5 drehen zu können, weist das erste Hohlprofil 1 an jener Stelle einer Seitenwand an welche die schraubenkopfseitigen Verlängerung der Schraubenachse trifft, eine Öffnung 1.2 auf, durch welche man mit einem Schraubenzieher an den Schraubenkopf gelangt.

Eine im Längsbereich zwischen den beiden Hebeln 3.3, 3.4 um die Schraube 3.5 verlaufende Spiralfeder 3.6 übt eine Druckkraft zwischen den beiden Hebeln 3.3, 3.4 aus. Das ist vor allem beim Montagevorgang hilfreich, weil damit die Hebel 3.3, 3.4 elastisch so auseinander gespannt werden, dass sie unter leichter Kraft an Wandflächen des ersten Hohlprofils 1 anliegen und damit zwar fixiert sind, aber dennoch noch so beweglich sind, dass sie bezüglich des Hohlprofils 1 in die passende Position geschoben werden können.

Für das Montieren der Verbindung muss ein Teil des Hakenteils 3.1 in jene Öffnung am zweiten Hohlprofil 2 eingebracht werden, welche den Rand 2.2 aufweist. Für dieses Einbringen ist der Hakenteil gegenüber dem Hohlprofil 2 durch Drehen um Achsen die normal zur Wand 2.1 ausgerichtet sind, und/oder durch Verschieben parallel zur Profilrichtung des Hohlprofils 2, so zu positionieren, dass der besagte Teil an solche Randbereiche der Öffnung am zweiten Hohlprofil 2 gelangt, welche voneinander weiter entfernt liegen als die größere Abmessung dieses Teils ist. In einer einfachen Ausführung hat die Öffnung am zweiten Hohlprofil 2 eine rechteckige Querschnittsfläche wobei die Breite des Rechtecks sehr viel größer ist als die Dicke des Hakenteils. Für eine Verbindung wie sie in Fig. 1 skizziert ist, werden dann zwei Verbindungsbeschläge 3 verwendet, welche parallel zueinander angeordnet sind.

Aus Gründen des Montagekomforts ist es vorteilhaft, den Bereich des Hakenteils 3.1, welcher den Randbereich 2.2 der Öffnung am Hohlprofil 2 einfasst, so auszulegen, dass er mit diesem Randbereich dann wenn er in der richtigen Position ist, eine leichte Presspassung bildet, sodass er bei nicht fixierter Verbindung seine Position hält, aber bei Bedarf noch von Hand aus bewegt werden kann.

Die Abmessung der Verbindungsbeschläge 3 in der zur Profilrichtung des zweiten Hohlprofils 2 parallelen Richtung kann relativ schmal sein. Die Hebel 3.3, 3.4 können beispielsweise durch jeweils 2 Bleche gebildet sein. Der Hakenteil 3.1 kann zwischen den Ebenen der insgesamt vier Bleche der Hebel angeordnet sein und selbst ein etwas stärkeres Blech sein. Für die Anwendung des Verbindungsbeschlages an Tischgestellen beträgt die "Dicke" des Beschlages somit typischerweise etwa 15 cm.

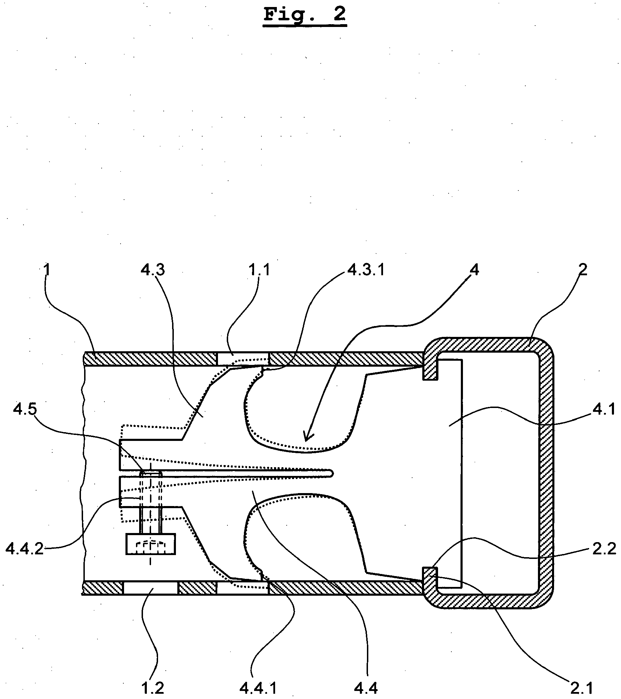

Bei der Verbindung gemäß Fig. 2 sind die gleichen Hohlprofile 1, 2 dargestellt wie in Fig. 1. Der wesentliche Unterschied zur Bauweise gemäß Fig. 1 besteht darin, dass die Teile Hakenteil 4.1, Hebel 4.3, Hebel 4.4 des Verbindungsbeschlages 4, welche in ihrer Funktion genau den Teilen 3.1, 3.3, 3.4 des Verbindungsbeschlages 3 von Fig. 1 entsprechen, monolithisch in einem Stück ausgebildet sind. Beim Schwenken der beiden Hebel 4.3, 4.4 zwecks Fixieren der Verbindung zwischen den beiden Hohlprofilen 1, 2 werden die Hebel nicht um eine Achse gedreht, sondern in sich selbst gebogen. Die sich durch diese Biegung ergebende Form ist in Fig. 2 in punktierten Linien angedeutet. Damit diese Biegung möglich ist, ist die in der erwünschten Biegeebene liegende Abmessung der Hebel 4.3, 4.4 im Längsbereich nahe dem Übergang zum Hakenteil 4.1 relativ gering ausgebildet.

Das Schwenken kann wiederum mit einer Schraube 4.5 erfolgen, welche mit einem Mutterngewinde am Hebel 4.4 in Gewindeeingriff ist und mit ihrer vom Schraubenkopf abgewandten Stirnseite gegen den Endbereich des Hebels 3.3 drückt.

Die Bauweise gemäß Fig. 2 ist einfacher und kostengünstiger herstellbar als die Bauweise gemäß Fig. 1. Die Verbindungsbeschläge 4 können schlanker sein als die Verbindungsbeschläge 3 und sie sind nahezu unverwüstlich robust. Allerdings ist für eine ordnungsgemäße Funktion und eine gute Montierbarkeit der Verbindung gemäß Fig. 2 gegenüber der Verbindung gemäß Fig. 1 deutlich stärker erforderlich, dass alle Teile sehr genau gefertigt sind.

Für die erfindungsgemäße Funktion ist generell wichtig, dass jenes Hohlprofil, in welchem der Verbindungsbeschlag 3, 4 angeordnet ist, in dem Sinn ein Hohlprofil ist, das es zwei Profilwände aufweisen muss, zwischen denen der Verbindungsbeschlag angeordnet werden kann. Dazu braucht das Hohlprofil nicht unbedingt ein geschlossenes Hohlprofil zu sein; es reicht wenn es wie beispielsweise ein C- oder U-Profil, eine Profilnut aufweist, welche in einer Dimension durch zwei einander gegenüber liegende Profilwände begrenzt ist.

Der mit dem Hohlprofil zu verbindende Teil braucht nicht zwangsläufig, wie das in den Zeichnungen dargestellte Hohlprofil 2, ein Hohlprofil zu sein. Es könnte ein nahezu beliebig geformter Teil sein, solange er eine hinterschnittene Öffnung, sei es als Durchbruch oder als einseitig offene Kammer, aufweist.

Die Verbindung ist aber insbesondere auch gut anwendbar, wenn die beiden zu verbindenden Teile geschlossene Hohlprofile sind (also in Querschnittsansicht jeweils eine gänzlich umschlossene Hohlkammer aufweisen). Diese Anwendung ist für die Bildung von Gestellen für Möbel besonders wertvoll, da dabei ebenmäßige Flächen gewünscht sind. Aus optischen Gründen ist für die Anwendung an Möbeln weiters wertvoll, dass für die Verbindung keinerlei Schweißungen oder Verformungen an im Sichtbereich befindlichen Teilen erforderlich sind. Die erfindungsgemäße Verbindung ist zudem so einfach zu montieren und zu demontieren, dass es sich lohnt, Möbel die transportiert werden müssen, in zerlegtem Zustand zu transportieren und erst am Aufstellungsort zusammenzubauen. Insbesondere dann, wenn die Möbel Tische sind - welche bezogen auf ihre Masse extrem sperrig sind - lohnt es sich sogar, allenfalls schon fertig montierte Tische vor einem Transport wieder zu zerlegen.

## Patentansprüche

1. Verbindung zwischen einem Hohlprofil (1) und einem an dessen Stirnseite anliegenden Teil (2), wobei das Hohlprofil (1) mit seiner stirnseitigen Endfläche an einer Seitenfläche des Teils (2) anliegt, ein im Hohlprofil (1) angeordneter Verbindungsbeschlag (3, 4) mit hakenförmigen Fortsätzen durch eine Öffnung an einer der Stirnseite des Hohlprofils (1) zugewandt liegenden Seitenfläche (2.1) des Teils (2) hindurch ragt und an Rändern (2.2) der Öffnung verhakt ist,
**dadurch gekennzeichnet, dass**
an jenem Teil (3.1, 4.1) des Verbindungsbeschlags (3, 4), welcher mit dem zweiten Teil (2) verhakt ist, ein einarmiger Hebel (3.3, 3.4, 4.3, 4.4) schwenkbar angelenkt ist, wobei die Schwenkachse (3.2) normal zur Profilrichtung des Hohlprofils (1) ausgerichtet ist, wobei die Bewegungsbahn einer Anschlagfläche (3.3.1, 3.4.1, 4.3.1, 4.4.1) des Hebels (3.3, 3.4, 4.3, 4.4) bei dessen Schwenkbewegung an ein solches Randstück einer Öffnung (1.1) in einer Mantelflächenseite des Hohlprofils (1) führt, welches bezüglich dieser Öffnung (1.1) dem Teil (2) zugewandt liegt und wobei die Schwenkbewegung des Hebels (3.3, 3.4, 4.3, 4.4) durch eine Schraube (3.5, 4.5) antreibbar ist, welche von der der Anschlagfläche (3.3.1, 3.4.1, 4.3.1, 4.4.1) gegenüberliegenden Seite des Hebels her an diesen andrückt.

2. Verbindung nach Anspruch 1, **dadurch gekennzeichnet, dass** der Hebel (4.3, 4.4) monolithisch mit jenem Teil (4.1) des Verbindungsbeschlages (4) verbunden ist, welcher mit dem Teil (2) verhakt ist und dass die Schwenkbarkeit des Hebels (4.3, 4.4) gegenüber dem Teil (4.1) durch elastische Biegsamkeit des Hebels (4.3, 4.4) gegeben ist.

3. Verbindung nach Anspruch 1 oder 2, **dadurch gekennzeichnet, dass** der Verbindungsbeschlag (3, 4) zwei einarmige Hebel (3.3, 3.4, 4.3, 4.4) aufweist und dass die Schraube (3.5, 4.5) an beiden Hebeln (3.3, 3.4, 4.3, 4.4) abgestützt ist.

4. Verbindung nach Anspruch 3, **dadurch gekennzeichnet, dass** die Hebel (3.3, 3.4) an jenem Teil (3.1) welcher mit dem Teil (2) verhakt ist, schwenkbar gelagert gehalten sind und dass eine Druckfeder (3.6) in einem Abstand zur Schwenkachse der beiden Hebel (3.3, 3.4) den Abstand zwischen diesen überbrückt.

5. Verbindung nach einem der Ansprüche 1 bis 4, **dadurch gekennzeichnet, dass** beide zu verbindenden Teile (1, 2) Hohlprofile (1, 2) sind.

6. Verbindung nach Anspruch 5, **dadurch gekennzeichnet, dass** die Hohlprofile (1, 2) Teile von Möbelgestellen sind.

7. Verbindung nach Anspruch 6, **dadurch gekennzeichnet, dass** die Möbelgestelle Tischgestelle sind.

## Claims

1. Connection between a hollow profile (1) and a part (2) adjacent to the front side of that profile with the hollow profile (1) being in contact with the side surface of the part (2) with its front end surface, a connecting fitting (3, 4) positioned inside the hollow profile (1) with hook-shaped extensions protruding through an opening on a side surface (2.1) of the part (2) facing the front side of the hollow profile (1) and interlocked with the opening on the edges (2.2),
which is **characterised by** the fact that
there is a hinged one-armed lever (3.3, 3.4, 4.3, 4.4) on the part (3.1, 4.1) of the connecting fitting (4, 3), which is interlocked with the second part (2) with the pivot axis (3.2) being aligned normally with the profile direction of the hollow profile (1) and the movement path of a stop surface (3.3.1, 3.4.1, 4.3.1, 4.4.1) of the lever (3.3, 3.4, 4.3, 4.4) leading to an edge section of an opening (1.1) on the shell surface side of the hollow profile (1) as part of the pivot motion, which faces the part (2) with respect to this opening (1.1) and with the pivot motion of the lever (3.3, 3.4, 4.3, 4.4) being drivable by a screw (3.5, 4.5), which pushes against the lever from the side facing the stop surface (3.3.1, 3.4.1, 4.3.1, 4.4.1).

2. Connection in accordance with claim 1, **characterised by** the fact that the lever (4.3, 4.4) is connected monolithically with the part (4.1) of the connecting fitting (4), which is interlocked with the part (2) and that the lever (4.3, 4.4) can be pivoted in respect to the part (4.1) thanks to the elastic flexibility of the lever (4.3, 4.4).

3. Connection in accordance with claim 1 or 2, **characterised by** the fact that the connecting fitting (3, 4) is provided with two single-arm levers (3.3, 3.4, 4.3, 4.4) and the screw (3.5, 4.5) is supported by both levers (3.3, 3.4, 4.3, 4.4).

4. Connection in accordance with claim 3, **characterised by** the fact that the levers (3.3, 3.4) are pivotally mounted on the part (3.1), which is interlocked with the part (2), and that a pressure spring (3.6) bridges the gap between the two levers (3.3, 3.4) at a distance to the pivot axis of these two levers.

5. Connection in accordance with one of the claims 1 to 4, **characterised by** the fact that both parts (1, 2) to be connected are hollow profiles (1, 2).

6. Connection in accordance with claim 5, **characterised by** the fact that the hollow profiles (1, 2) are parts of furniture frameworks.

7. Connection in accordance with claim 6, **characterised by** the fact that the furniture frameworks are table frames.

## Revendications

1. Raccord entre un profil creux (1) et une partie (2) reposant sur la face avant de ce dernier, le profil creux (1) reposant avec sa face d'extrémité côté frontal sur une surface latérale de la partie (2), une ferrure d'assemblage (3, 4) agencée dans le profil creux (1) avec des saillies en forme de crochet passant à travers une ouverture sur une surface latérale (2.1) de la partie (2) orientée vers la face avant du profil creux (1) et s'accrochant aux bords (2.2) de l'ouverture,
**caractérisé en ce que**
sur la partie (3.1, 4.1) de la ferrure d'assemblage (3, 4) venant s'engager avec la deuxième partie (2), il est articulé de façon pivotante un levier (3.3, 3.4, 4.3, 4.4) à un bras, l'axe de pivotement (3.2) étant normalement aligné par rapport au sens du profil creux (1), la trajectoire de déplacement d'une surface de butée (3.3.1, 3.4.1, 4.3.1, 4.4.1) du levier (3.3, 3.4, 4.3, 4.4) lors de son déplacement en pivotement entraînant une bordure d'une ouverture (1.1) dans une surface d'enveloppe du profil creux (1), lequel est orienté vers la partie (2) par rapport à cette ouverture (1.1) et le mouvement de pivotement du levier (3.3, 3.4, 4.3, 4.4) pouvant être entraîné par une vis (3.5, 4.5), laquelle vis venant appuyer depuis le côté opposé à la surface de butée (3.3.1, 3.4.1, 4.3.1, 4.4.1) du levier.

2. Raccord selon la revendication 1, **caractérisé en ce que** le levier (4.3, 4.4) est raccordé de façon monolithique avec la partie (4.1) de la ferrure d'assemblage (4) qui est accrochée à la partie (2), et **en ce que** la possibilité de pivotement du levier (4.3, 4.4) par rapport à la partie (4.1) est donnée par la souplesse élastique du levier (4.3, 4.4).

3. Raccord selon la revendication 1 ou 2, **caractérisé en ce que** la ferrure d'assemblage (3, 4) présente deux leviers (3.3, 3.4, 4.3, 4.4) à un bras et **en ce que** la vis (3.5, 4.5) repose sur les deux leviers (3.3, 3.4, 4.3, 4.4).

4. Raccord selon la revendication 3, **caractérisé en ce que** les leviers (3.3, 3.4) sont maintenus pivotants au niveau de la partie (3.1) qui est accrochée à la partie (2), et **en ce qu'**un ressort de pression (3.6), à une certaine distance de l'axe de pivotement des deux leviers (3.3, 3.4), comble la distance entre ces derniers.

5. Raccord selon l'une des revendications 1 à 4, **caractérisé en ce que** les deux parties (1, 2) à raccorder sont des profils creux (1, 2).

6. Raccord selon la revendication 5, **caractérisé en ce que** les profils creux (1, 2) sont des parties de cadres de meubles.

7. Raccord selon la revendication 6, **caractérisé en ce que** les cadres de meubles sont des cadres de tables.
